# EUROPEAN PATENT APPLICATION

(11) **EP 4 803 856 A1**
(43) Date of publication of application: **09.09.2026**
(21) Application number: 24899671.2
(22) Date of filing: 26.11.2024
(51) Int. Cl.: G01B 15/06, H04W 4/02, H04W 24/08

(54) **METHOD FOR SENDING MEASUREMENT INFORMATION, AND COMMUNICATION APPARATUS**

(30) Priority: 08.12.2023 CN 202311688874
(71) Applicant: Huawei Technologies Co., Ltd., Shenzhen, Guangdong 518129 (CN)
(72) Inventor: LI, Cheng, Shenzhen, Guangdong 518129 (CN); HUANG, Su, Shenzhen, Guangdong 518129 (CN)
(74) Representative: Maiwald GmbH
(86) International application number: PCT/CN2024/134408
(87) International publication number: WO 2025/119030

(57) **Abstract**

**A method** and a communication apparatus for sending measurement information are provided. In the method, a first device obtains first measurement information and second measurement information based on a first reference signal and a second reference signal, respectively, wherein the first measurement information comprises information about N coordinates, the second measurement information comprises information about M coordinates, the N coordinates and the M coordinates are both associated with a first path, and N and M are positive integers; and the first device sends the first measurement information and the second measurement information to a second device. The method can implement deformation detection and reporting of a target under a positioning framework of a cellular network.

## Description

This application claims priority to Chinese Patent Application No. 202311688874.6, filed with the China National Intellectual Property Administration on December 8, 2023, and entitled "Method for Sending Measurement Information and Communication Device," which is incorporated herein by reference in its entirety.

### Technical Field

This application relates to the communication field, and more specifically, to a method for sending measurement information and a communication device.

### Background

The basic principle of deformation detection is to continuously send signals of a fixed phase from a measurement station, collect echo signals at different moments, perform correlation processing on signals at different moments, and obtain a phase change pattern. The phase change can be converted into a deformation amount. However, the current cellular network architecture does not support the detection and reporting of deformation information. Therefore, how to implement deformation detection of a passive target under a positioning framework of a cellular network in combination with positioning characteristics becomes an urgent problem to be resolved.

### Summary

This application provides a method for sending measurement information and a communications apparatus, where the method can implement deformation detection and reporting of a target under a positioning framework of a cellular network.

According to a first aspect, a method for sending measurement information is provided. The method may be performed by a first device, or may be performed by a module (for example, a processor, a chip, or a chip system) applied to the first device, or may be implemented by a logical node, a logical module, or software that can implement all or some functions of the first device. This is not limited thereto.

The method includes: obtaining first measurement information based on a first reference signal, where the first measurement information includes information about N coordinates, the N coordinates are associated with a first path, and N is a positive integer; obtaining second measurement information based on a second reference signal, where the second measurement information includes information about M coordinates, the M coordinates are associated with the first path, and M is a positive integer; and sending the first measurement information and the second measurement information.

For example, the first device is a network device or a terminal device.

It may be understood that because the N coordinates are associated with the first path, and the information about the N coordinates is obtained based on the first reference signal, it may also be considered that the first reference signal is associated with the first path. For example, that the first reference signal is associated with the first path may specifically be that the first reference signal is transmitted on the first path.

Optionally, the first path is associated with the first target. For example, that the first path is associated with the first target may specifically be that the first target is located on the first path.

In this application, that the first device obtains the first measurement information based on the first reference signal may be understood as that the first device obtains the first measurement information based on an echo signal of the first reference signal. For example, the first reference signal encounters the first target when being transmitted on the first path, and an echo signal is generated after the first reference signal is refracted, reflected, or scattered on a surface of the first target. The first device receives the echo signal, and obtains the first measurement information based on the echo signal.

In the foregoing technical solution, the first device may obtain corresponding measurement information based on different reference signals, and then report the obtained measurement information to the device initiating the deformation measurement, so that the device initiating the deformation measurement can determine the deformation of the target based on the received measurement information. This method enables deformation detection and reporting of a passive target under a positioning framework of a cellular network. In addition, a conventional deformation detection principle can only solve deformation detection of a single point, and cannot solve deformation detection of an extended target. However, the measurement information obtained based on the reference signal in this application includes information about a plurality of coordinates, so that deformation detection and reporting of a target (namely, multiple points) can be implemented.

In some implementations of the first aspect, N is equal to M.

In some implementations of the first aspect, information about L coordinates in the information about the M coordinates is related to information about L coordinates in the information about the N coordinates, where L is a positive integer.

For example, that information about L coordinates in the information about the M coordinates is related to information about L coordinates in the information about the N coordinates may mean that information about L coordinates in the information about the M coordinates is in a one-to-one correspondence with information about L coordinates in the information about the N coordinates.

In some implementations of the first aspect, the information about the N coordinates indicates the N coordinates, and the information about the M coordinates indicates the M coordinates.

In some implementations of the first aspect, the information about the N coordinates indicates the N coordinates, and the information about the M coordinates includes differential information of the M coordinates.

In some implementations of the first aspect, the differential information of the M coordinates indicates M differential coordinates corresponding to the M coordinates or M differential distances corresponding to the M coordinates.

In some implementations of the first aspect, the coordinate types corresponding to the N coordinates and the M coordinates are Cartesian coordinates or polar coordinates.

In some implementations of the first aspect, the first reference signal and the second reference signal are either of the following reference signals: a positioning reference signal PRS, a sounding reference signal SRS, a channel state information-reference signal CSI-RS, a primary synchronization signal PSS, a secondary synchronization signal SSS, a demodulation reference signal DMRS, a sensing signal, or a sounding signal.

According to a second aspect, a communications apparatus is provided, where the communications apparatus is configured to perform the method provided in the first aspect. Specifically, the communications apparatus may include units and/or modules configured to perform the method provided in the first aspect or any one of the implementations of the first aspect.

In an implementation, the communications apparatus is a first device. When the communications apparatus is the first device, the transceiver unit may be a transceiver or an input/output interface, and the processing unit may be at least one processor. Optionally, the transceiver may be a transceiver circuit. Optionally, the input/output interface may be an input/output circuit.

In another implementation, the communications apparatus is a chip, a chip system, or a circuit used in a first device. When the communications apparatus is the chip, the chip system, or the circuit used in the first device, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

For example, the first device is a terminal device or a network device.

According to a third aspect, a communications apparatus is provided. The apparatus includes a memory, configured to store a program; and at least one processor, configured to execute the computer program or instructions stored in the memory, to perform the method provided in any one of the first aspect or the implementations of the first aspect.

In an implementation, the communications apparatus is a first device. For example, the first device is a terminal device or a network device.

In another implementation, the apparatus is a chip, a chip system, or a circuit used in a first device.

According to a fourth aspect, a computer-readable storage medium is provided. The computer-readable storage medium stores a computer program, where when the computer program is run on a computer, the method provided in any one of the first aspect or the implementations of the first aspect is performed.

According to a fifth aspect, a computer program product comprising an instruction is provided. When the computer program product runs on a computer, the computer is enabled to perform the method provided in the first aspect or any one of the implementations of the first aspect.

According to a sixth aspect, a chip is provided. The chip includes a processor and a communication interface. The processor reads, by using the communication interface, an instruction stored in a memory, and performs the method provided in the first aspect or any one of the implementations of the first aspect.

Optionally, in an implementation, the chip further includes a memory, where the memory stores a computer program or an instruction, the processor is configured to execute the computer program or the instruction stored in the memory, and when the computer program or the instruction is executed, the processor is configured to perform the method provided in the first aspect or any one of the implementations of the first aspect.

According to a seventh aspect, a communications system is provided. The communications system includes the communications apparatus according to the third aspect.

### Brief Description of the Drawings

FIG. 1 is a schematic diagram of a wireless communication system 100 applicable to the embodiments of this application.
FIG. 2 is a schematic diagram of a method 200 for sending measurement information according to this application.
FIG. 3 is a schematic diagram of a sensing mode to which this application is applicable.
FIG. 4 and FIG. 5 are schematic diagrams of a method for sending measurement information in a base station's single-station sensing mode according to this application.
FIG. 6 and FIG. 7 are schematic block diagrams of a communication apparatus according to embodiments of this application.

### Specific Implementation

The technical solutions in embodiments of this application are described below with reference to the accompanying drawings.

Before the embodiments of this application are described, the following points are first described.

First, in this application, unless otherwise specified or there is a logical conflict, terms and/or descriptions in different embodiments are consistent and may be mutually referenced, and technical features in different embodiments may be combined based on an internal logical relationship thereof, to form a new embodiment.

It may be understood that some optional features in embodiments of this application may not depend on other features in some scenarios, or may be combined with other features in some scenarios. This is not limited.

It may be understood that solutions in embodiments of this application may be used in combination, and explanations or descriptions of terms or similar operations or steps in embodiments may be mutually referenced or explained in embodiments. This is not limited in this application.

2. In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. In the textual descriptions of this application, the character "/" generally indicates an "or" relationship between the associated objects. "At least one of the following" or a similar expression thereof means any combination of these items, including any combination of one item or a plurality of items. For example, "at least one of a, b, and c" may indicate the following cases: a, or b, or c, or a and b, or a and c, or b and c, or a, b, and c, where a, b, and c may each be singular or plural.

Third, in this application, "first", "second", and various numbers are used for differentiation for ease of description, and are not intended to limit the scope of the embodiments of this application. For example, the terms are used to distinguish different messages, rather than to describe a specific order or sequence. It should be understood that objects described in such a way may be interchangeable in appropriate circumstances, so as to describe solutions beyond the embodiments of this application.

Fourth, in this application, the terms "include", "have", and any other variants thereof are intended to cover non-exclusive inclusion. For example, a process, method, system, product, or device that includes a series of steps or units is not necessarily limited to those expressly listed steps or units, but may include other steps or units that are not expressly listed or inherent to such processes, methods, products, or devices.

Fifth, in this application, "indication" may include both direct indication and indirect indication. When it is described that some indication information indicates A, it may include that the indication information directly indicates A or indirectly indicates A, and does not necessarily mean that the indication information must carry A.

6. In this application, "sending information to (for example, a device)" may be understood as that a destination end of the information is the device, and may include directly or indirectly sending the information to the device. "Receiving information from (for example, a device), or receiving information from (for example, a device)" may be understood as that a source end of the information is the device, and may include directly or indirectly receiving the information from the device. The information may undergo necessary processing, such as format change, between the source end and the destination end at which the information is sent, but the destination end may understand the information as valid information from the source end.

In this application, "sending information" may be understood as a device sending information to another device, or may be understood as a logical module within a device sending information to another logical module. For example, "a network device sends information" may be understood as the network device sending information to another device (for example, a terminal device), or may be understood as a logical module 1 in the network device sending information to a logical module 2.

In this application, "receiving information" may be understood as a device receiving information from another device, or may be understood as a logical module inside the device receiving information from another logical module. For example, "a network device receives information" may be understood as a network device receiving information from another device (for example, a terminal device), or may be understood as a logical module 1 in the network device receiving information from a logical module 2.

7. In the schematic diagrams in the accompanying drawings of this specification of this application, an arrow or a block shown by a dashed line indicates an optional step or an optional module.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, a 5th generation (5th generation, 5G) system or a new radio (new radio, NR) system, a future communications system, and a vehicle-to-everything (vehicle-to-X V2X) system, where V2X may include a vehicle to internet (vehicle to network, V2N), a vehicle to vehicle (vehicle to-vehicle, V2V), a vehicle to infrastructure (vehicle to infrastructure, V2I), a vehicle to pedestrian (vehicle to pedestrian, V2P), or the like, a long term evolution-vehicle (long term evolution-vehicle, LTE-V) technology for inter-vehicle communication, an Internet of Vehicles (IoV) system, a machine type communication (machine type communication, MTC) system, an Internet of Things (internet of things, IoT) system, a long term evolution-machine (long term evolution-machine, LTE-M) technology for machine-to-machine communication, a machine to machine (machine to machine, M2M) system, or the like.

The terminal device in the embodiments of this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, an audio device, a terminal device in a future 5G network, a terminal device in a future evolved public land mobile network (Public Land Mobile Network, PLMN), or the like. This is not limited in embodiments of this application.

The terminal device in this application may also be a road side communication unit (road side units, RSU). The RSU is a facility deployed at the roadside in a vehicle-to-everything (V2X) network to assist in communication. The RSU is directly connected to a backbone network and can perform wireless communication with vehicles. Compared with vehicles in the V2X network, the RSU has better communication capabilities, a wider coverage area, and a higher transmission speed, and can communicate with multiple vehicles at the same time. In addition, the RSU has a large storage space, which can store information and improve the communication probability. Therefore, by deploying relevant RSUs in a road traffic system, an existing internet access problem of vehicles can be effectively resolved, and communication opportunities between vehicles can be greatly increased, thereby achieving efficient message transmission between vehicles through the RSU by caching messages.

For example, the terminal device may include a radio resource control (radio resource control, RRC) signaling interaction module, a media access control (media access control, MAC) signaling interaction module, and a physical (physical, PHY) signaling interaction module. The RRC signaling interaction module may be a module used by the network device and the terminal device to send and receive RRC signaling. The MAC signaling interaction module may be a module used by the network device and the terminal device to send and receive MAC control element (control element, CE) (MAC-CE) signaling. The PHY signaling and data may be a module used by the network device and the terminal device to send and receive uplink control signaling or downlink control signaling, uplink and downlink data, or downlink data.

The network device in the embodiments of this application may be a device configured to communicate with a terminal device. The network device includes but is not limited to: an evolved NodeB (evolved nodeB, eNB, or eNodeB) in an LTE system; or may be a radio controller in a cloud radio access network (cloud radio access network, CRAN) scenario; or may be a radio network controller (radio network controller, RNC), a base station controller (base station controller, BSC), a home evolved NodeB (for example, home evolved nodeB, or home nodeB, HNB), a baseband unit (baseband unit, BBU), or the network device may be a relay station, an access point, a vehicle-mounted device, a wearable device, a network device in a 5G network, or a network device in a future evolved PLMN network. The network device may be an access point (access point, AP), a wireless relay node, a wireless backhaul node, a transmission point (transmission point, TP), a transmission and reception point (transmission and reception point, TRP), or the like in a wireless local area network (wireless local area network, WLAN); or may be a gNB or a transmission point (TRP or TP) in a new radio (new radio, NR) system, or may be one or a group (including a plurality of antenna panels) of antenna panels of a base station in a 5G system, or may be a network node that forms a gNB or a transmission point. This is not limited in embodiments of this application. All or some of the functions of the network device in this application may be implemented by a software function running on hardware, or by a virtualization function instantiated on a platform (for example, a cloud platform). The network device in this application may alternatively be a logical node, a logical module, or software that can implement all or some functions of the network device.

In some deployments, the gNB may include a centralized unit (CU) and a distributed unit (DU). The gNB may further include an active antenna unit (AAU). The CU implements some functions of the gNB, and the DU implements some functions of the gNB. For example, the CU is responsible for processing non-real-time protocols and services, and implements functions of radio resource control (radio resource control, RRC) and a packet data convergence protocol (packet data convergence protocol, PDCP) layer. The DU is responsible for processing physical layer protocols and real-time services, and implements functions of a radio link control (radio link control, RLC) layer, a media access control (media access control, MAC) layer, and a physical (physical, PHY) layer. The AAU implements some physical layer processing functions, radio frequency processing, and functions related to an active antenna. Because information at the RRC layer ultimately becomes information at the PHY layer, or is converted from information at the PHY layer, in this architecture, higher layer signaling, such as RRC layer signaling, may also be considered as being sent by the DU, or sent by the DU and the AAU. It may be understood that the network device may be a device that includes one or more of a CU node, a DU node, and an AAU node. In addition, the CU may be divided into a network device in a radio access network (RAN), or the CU may be divided into a network device in a core network (core network, CN). This is not limited in this application.

The network device in the embodiments of this application may alternatively be an open radio access network (open-radio access network, O-RAN) device, which may also be referred to as a RAN node. A plurality of RAN nodes collaborate to assist a terminal device in implementing radio access, where different RAN nodes respectively implement some functions of the network device. As an example, the RAN node may be a CU, a DU, a CU-control plane (control plane, CP), a CU-user plane (user plane, UP), a radio unit (radio unit, RU), or the like. The CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH). For example, in some deployments, the network device may include a centralized unit (centralized unit, CU) and a DU. In different systems, the CU (or CU-CP and CU-UP), the DU, or the RU may also have different names, but a person skilled in the art may understand their meanings. For example, in an ORAN system, the CU may also be referred to as an O-CU (open CU), the DU may also be referred to as an O-DU (open DU), the CU-CP may also be referred to as an O-CU-CP (open CU-CP), the CU-UP may also be referred to as an O-CU-UP (open CU-UP), and the RU may also be referred to as an O-RU (open RU). For ease of description, this application describes an example using the CU, the CU-CP, the CU-UP, the DU, and/or the RU. Any one of the CU (or the CU-CP, the CU-UP), the DU, and/or the RU in this application may be implemented by using a software module, a hardware module, or a combination of a software module and a hardware module.

Optionally, for the network elements in an ORAN system, each network element may implement the protocol layer functions as shown in Table 1 below.

**Table 1**

| ORAN Network Element | Protocol Layer Functions |
|---|---|
| O-CU-CP | RRC, packet data convergence protocol control plane (PDCP-C) |
| O-CU-UP | Service data adaptation protocol (SDAP), packet data convergence protocol user plane (PDCP-U) |
| O-DU | RLC, MAC, physical higher layer (PHY-high) |
| O-RU | Physical Layer Low (PHY-low) |

It should be noted that in the ORAN system, the network device in this application may be one or more of the network elements mentioned in Table 1 above.

The architecture of the CU and DU of an access network device is described below. The access network device includes at least one CU and at least one DU. Optionally, the access network device also includes at least one RU.

The following will be described by taking an example where an access network device includes one CU and one DU. The CU has some functions of the core network, and the CU may include a CU-CP and a CU-UP. The CU and the DU may be configured according to the protocol layer functions of the wireless network that they implement. For example, the CU is configured to implement the functions of the Packet Data Convergence Protocol (PDCP) layer and protocol layers above (e.g., the RRC layer and/or the SDAP layer). The DU is configured to implement the functions of protocol layers below the PDCP layer (e.g., the RLC layer, the MAC layer, and/or the physical (PHY) layer). For another example, the CU is configured to implement the functions of protocol layers above the PDCP layer (e.g., the RRC layer and/or the SDAP layer), and the DU is configured to implement the functions of protocol layers at or below the PDCP layer (e.g., the RLC layer, the MAC layer, and/or the PHY layer).

When the CU includes a CU-CP and a CU-UP, the CU-CP is used to implement the control plane functions of the CU, and the CU-UP is used to implement the user plane functions of the CU. For example, when the CU is configured to implement the functions of the PDCP layer, RRC layer, and SDAP layer, the CU-CP is used to implement the functions of the RRC layer and the control plane functions of the PDCP layer, while the CU-UP is used to implement the functions of the SDAP layer and the user plane functions of the PDCP layer.

The CU-CP may interact with network elements in the core network that are used to implement control plane functions. The network element in the core network used to implement control plane functions may be an access and mobility management function (AMF) network element, for example, an access and mobility management function (AMF) in a 5G system. The access and mobility management function network element is responsible for managing mobility in the mobile network, such as location updates of the terminal device, network registration of the terminal device, handover of the terminal device, and the like.

The CU-UP can interact with network elements in the core network that are used to implement user plane functions. The network elements in the core network that are used to implement user plane functions, for example, the User Plane Function (UPF) in a 5G system, are responsible for forwarding and receiving data in the terminal device.

The configuration of the CU and DU mentioned above is merely an example, and the functions of the CU and DU can be configured according to the needs. For instance, the CU or DU can be configured to have functions of more protocol layers, or the CU or DU can be configured to have partial processing functions of protocol layers. For example, some functions of the RLC layer and functions of protocol layers above the RLC layer can be assigned to the CU, while the remaining functions of the RLC layer and functions of protocol layers below the RLC layer can be assigned to the DU. Another example is that the functions of the CU or DU can be divided according to the service type or other system requirements. For instance, functions that need to meet a smaller delay requirement can be assigned to the DU based on the processing time, while functions that do not need to meet this delay requirement can be assigned to the CU.

The DU and the RU may cooperate to jointly implement functions at the PHY layer. One DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement a higher layer function at the PHY layer, and the RU is configured to implement a lower layer function at the PHY layer or implement the lower layer function and a radio frequency function. The higher layer function at the physical layer may include some functions of the physical layer, where the some functions are closer to the MAC layer. The lower layer function at the physical layer may include another part of functions of the physical layer, where the another part of functions is closer to the intermediate radio frequency side.

It should be noted that the network device may be a device or an apparatus with a chip, or a device or an apparatus integrated with a circuit, or may be a chip, a chip system, a module, or a control unit in the device or the apparatus shown above, which is not specifically limited in this application. It should be noted that, in this application, when the network device is mentioned, the network device may refer to the network device itself, or may refer to a chip, a functional module, an integrated circuit, or the like that completes the method provided in this application in the network device, which is not specifically limited in this application.

To facilitate understanding of the embodiments of this application, a communication system to which the embodiments of this application may be applied is first described.

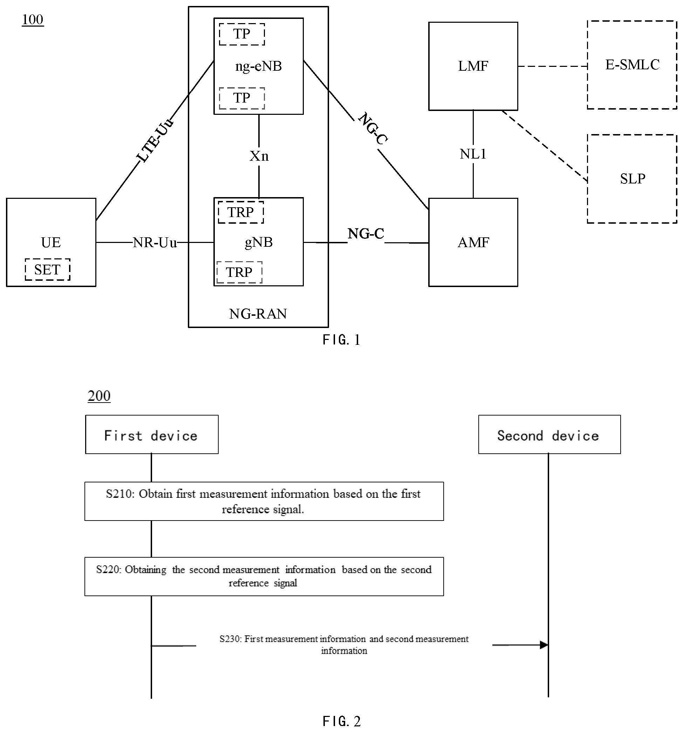

FIG. 1 is a schematic diagram of a wireless communications system 100 applicable to an embodiment of this application. The communications system 100 includes a terminal device (represented as UE in FIG. 1), a radio access network (represented as a next generation radio access network (next generation radio access network, NG-RAN) in FIG. 1), and a core network.

The radio access network includes one or more next generation evolved node B (next generation evolved node B, ng-eNB) and gNB. The ng-eNB represents an LTE base station that accesses a 5G core network, and the gNB represents a 5G base station that accesses a 5G core network. The ng-eNB and the gNB, or between two ng-eNBs, or between two gNBs communicate with each other through an Xn interface. The Xn interface may also be referred to as an XnAP interface. The radio access network is connected to the core network via an NG-C interface.

The core network includes an access and mobility management function (access and mobility management function, AMF) and other functions such as a location management function (location management function, LMF).

The LMF is responsible for supporting different types of location services related to the UE, including positioning the UE and transmitting assistance data to the UE. The LMF may signal interact with a RAN, for example, an ng-eNB or a gNB, and the UE. For example, the LMF and the ng-eNB or the gNB exchange information through new radio positioning protocol annex (NRPPa) messages, for example, to obtain configuration information of a positioning reference signal (position reference signal, PRS), a sounding reference signal (sounding reference signal, SRS), cell timing, cell location information, and the like. For another example, the LMF and the UE exchange information through LTE positioning protocol (LTE positioning protocol, LPP) messages, for example, to transfer UE capability information, assistance information, measurement information, and the like.

The AMF entity may receive a location service request related to the UE from a location service (location services, LCS) entity in the 5G core (5G core, 5GC) network, or the AMF may initiate some location services on behalf of a specific UE, and forward the location service request to the LMF.

The terminal device is connected to the radio access network through an ng-eNB over an LTE-Uu interface. The terminal device may also be connected to the radio access network through a gNB over an NR-Uu interface.

It should be further understood that the communications system 100 may include one or more terminal devices, for example, may include one or more terminal device groups (for example, a UE set shown in FIG. 1). One gNB may send data or control signaling to one or more terminal devices. A plurality of gNBs may also send data or control signaling to one terminal device at the same time.

Optionally, the ng-eNB and the gNB in FIG. 1 may alternatively be replaced with a TRP, a TP, a reception point (reception point, RP), a cell, or the like.

Currently, deformation detection of objects has a wide range of applications in various fields, such as industrial safety, bridge and dam safety, and construction. Through deformation detection, potential safety issues can be identified in a timely manner, allowing for prompt maintenance and preventing safety accidents. Nowadays, wireless base stations are widely deployed outdoors. By leveraging the sensing capabilities of these wireless base stations, deformation detection can be achieved. Unlike traditional target detection, which detects unknown targets and obtains information about the target's location and size, traditional sensing capabilities, deformation detection focuses on long-term monitoring of specific targets to capture subtle changes in shape or displacement information. For example, in this application, "deformation" can also be replaced with terms such as "micro-deformation," "displacement," or other similar descriptions.

The fundamental principle of deformation detection involves a measurement station (base station or UE) continuously transmitting signals with a fixed phase, collecting echo signals at different time points, and performing correlation processing between the signals at different time points to obtain the pattern of phase changes. These phase changes can then be converted into deformation measurements. However, the cellular network architecture does not support the detection and reporting of deformation information. Therefore, how to implement deformation detection for passive targets within the framework of cellular network positioning, while leveraging the characteristics of positioning, has become an urgent problem to be solved.

In view of this, this application provides a method for sending measurement information, which can effectively resolve the foregoing technical problem. The following provides a detailed description of the method for sending measurement information provided in this application.

It may be understood that, in this application, an example in which the first device and the second device are used as the execution entities of the interaction indication is used for illustration, but the execution entity of the interaction indication is not limited in this application. For example, the method performed by the first device in this application may also be performed by a module (for example, a chip, a chip system, or a processor) applied to the first device, or may be implemented by a logical node, a logical module, or software that can implement all or some functions of the first device. The method performed by the second device in this application may also be performed by a module (for example, a chip, a chip system, or a processor) applied to the second device, or may be implemented by a logical node, a logical module, or software that can implement all or some functions of the second device.

FIG. 2 is a schematic diagram of a method 200 for sending measurement information according to this application. The method 200 includes the following steps.

S210: The first device obtains first measurement information based on a first reference signal, where the first measurement information includes information about N coordinates, the N coordinates are associated with a first path, and N is a positive integer.

It may be understood that because the N coordinates are associated with the first path, and the information about the N coordinates is obtained based on the first reference signal, it may also be considered that the first reference signal is associated with the first path. For example, that the first reference signal is associated with the first path may specifically be that the first reference signal is transmitted on the first path.

Optionally, the first measurement information may further include one or more of the following other measurement information: delay-related measurement information, for example, a time of arrival (Time of arrival, TOA), a relative time of arrival (Relative Time of Arrival, RTOA), a reference signal time difference (Reference signals time difference, RSTD), a round-trip time (Round-Trip time, RTT), or a receive- and transmit time difference (Rx-Tx time difference); angle-related measurement information, for example, an angle of arrival (Angle of arrival, AoA)/direction of arrival (Direction of arrival, DoA), an angle of departure (Angle of departure, AoD), a zenith angle of arrival (Zenith angle of arrival, ZoA), or a zenith angle of departure (Zenith angle of departure, ZoD); phase-related measurement information, for example, a reference signal carrier phase (Reference signal carrier phase, RSCP), a reference signal carrier phase difference (Reference signal carrier phase difference, RSCPD), or a phase (Phase); or energy-related measurement information, for example, a reference signal received power (Reference signal received power, RSRP) or a reference signal received path power (Reference signal received path power, RSRPP).

Optionally, the first path is associated with the first target. For example, that the first path is associated with the first target may be specifically that the first target is located in the first path.

Optionally, the first measurement information is associated with the first path. For example, the first measurement information is measurement information of the first path obtained through measurement based on the first reference signal.

Optionally, the N coordinates are associated with the first target. For example, the information about the N coordinates is coordinate information of the first target obtained through measurement based on the first reference signal.

In this application, that the first device obtains the first measurement information based on the first reference signal may be understood as that the first device obtains the first measurement information based on an echo signal of the first reference signal. For example, the first reference signal encounters the first target when being transmitted on the first path, and an echo signal is generated after the first reference signal is refracted, reflected, or scattered on a surface of the first target. The first device receives the echo signal, and obtains the first measurement information based on the echo signal.

S220. The first device obtains second measurement information based on a second reference signal, where the second measurement information includes information about M coordinates, the M coordinates are associated with the first path, and M is a positive integer.

Similarly, because the M coordinates are associated with the first path, and the information about the M coordinates is obtained based on the second reference signal, it may also be considered that the second reference signal is associated with the first path. For example, that the second reference signal is associated with the first path may specifically mean that the second reference signal is transmitted on the first path.

Optionally, the second measurement information is associated with the first path. For example, the second measurement information is measurement information of the first path obtained through measurement based on the first reference signal.

Optionally, the M coordinates are associated with the first target. For example, the information about the M coordinates is coordinate information of the first target obtained through measurement based on the first reference signal.

Similarly, that the first device obtains the second measurement information based on the second reference signal may also be understood as that the first device obtains the second measurement information based on an echo signal of the second reference signal.

For example, the first reference signal and the second reference signal may be a positioning reference signal (positioning reference signal, PRS), a sounding reference signal (sounding reference signal, SRS), a channel state information-reference signal (channel state information-reference signal, CSI-RS), a primary synchronization signal (primary synchronization signal, PSS), a secondary synchronization signal (secondary synchronization signal, SSS), a demodulation reference signal (demodulation reference signal, DMRS), a sensing signal, a sounding signal, or the like. It should be understood that the foregoing is merely an example of the first reference signal and the second reference signal, and the first reference signal and the second reference signal may also be other reference signals. The first reference signal and the second reference signal are not specifically limited in this application.

It should be noted that, in this application, the echo signals of the first reference signal and the second reference signal are received by the first device, but the first reference signal and the second reference signal may be sent by the first device, or may be sent by another device, which is not specifically limited in this application. For example, the first device may be a terminal device or a network device. The following provides an example of a sensing mode applicable to the embodiments of this application by illustrating the reception and transmission of the reference signal #1 (for example, the first reference signal or the second reference signal).

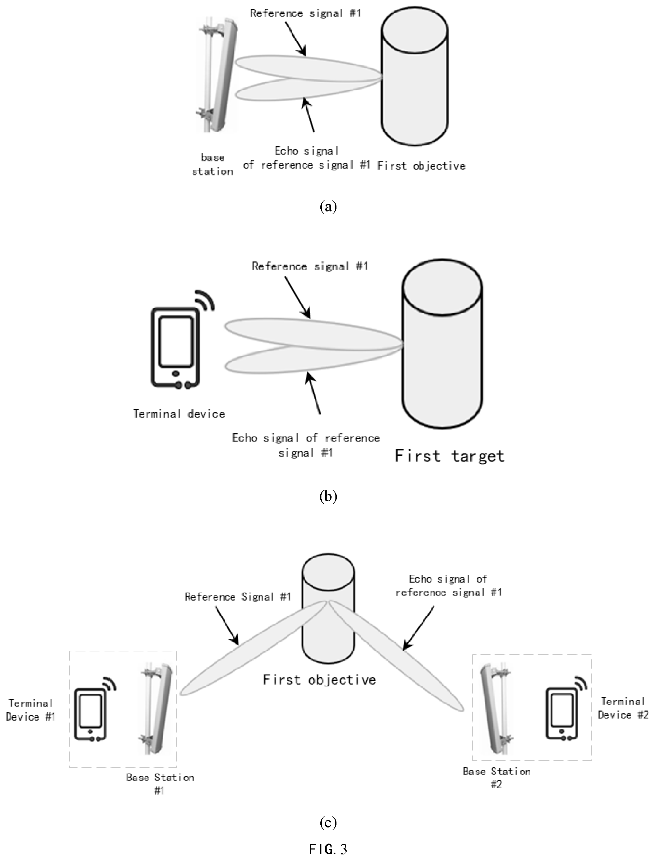

As shown in (a) of FIG. 3 and (b) of FIG. 3, if the transmit end of the reference signal #1 and the receive end of the echo signal of the reference signal #1 are the same device, the sensing mode corresponding to this scenario is a monostatic sensing mode. In (a) of FIG. 3, both the transmit end of the reference signal #1 and the receive end of the echo signal of the reference signal #1 are base stations, while in (b) of FIG. 3, both the transmit end of the reference signal #1 and the receive end of the echo signal of the reference signal #1 are terminal devices.

As shown in (b) of Figure 3, when the transmitting end of the reference signal and the receiving end of the echo signal of the reference signal are different devices, the sensing mode corresponding to this scenario is referred to as a bistatic sensing mode. In this context, the device that sends the reference signal #1 in (c) of Figure 3 can be either the terminal device #1 or any device within the base station #1, and the device that receives the echo signal of the reference signal #1 can be either the terminal device #2 or any device within the base station #2.

Optionally, before S210 and S220, the method further includes: the second device sending a request message to the first device, where the request message requests to perform measurement, and the measurement request is associated with the first path. Correspondingly, the first device receives the request message from the second device. Furthermore, the measurement request being associated with the first path indicates a request to measure the target (i.e., the first target) associated with the first path.

Optionally, M may be equal to N, or M may not be equal to N.

Optionally, the information of the L coordinates in the information of the M coordinates is correlated with the information of the L coordinates in the information of the N coordinates, where L is a positive integer, and L is less than or equal to the smaller value between N and M. For example, if N=M=L, it indicates that the information of the M coordinates is correlated with the information of the N coordinates.

For example, that the information about the L coordinates in the information about the M coordinates is related to the information about the L coordinates in the information about the N coordinates may mean that the information about the L coordinates in the information about the M coordinates is in a one-to-one correspondence with the information about the L coordinates in the information about the N coordinates. For another example, that the information about the M coordinates is related to the information about the N coordinates may mean that the information about the M coordinates is in a one-to-one correspondence with the information about the N coordinates. It may be understood that the final purpose of this application is to depict a deformation of the first target. Therefore, the following specifically describes how to depict the deformation of the first target with reference to the information about the N coordinates and the information about the M coordinates. The following provides two example implementations for depicting the deformation of the first target.

Implementation 1: The information about the N coordinates indicates N coordinates, and the information about the M coordinates indicates M coordinates. For example, the coordinate types corresponding to the N coordinates and the M coordinates are both Cartesian coordinates or polar coordinates. The following provides some examples for illustration with reference to different coordinate types.

Example 1: If the N coordinates and the M coordinates are three-dimensional Cartesian coordinates, any one of the N coordinates and the M coordinates includes three real numbers (x, y, z), where (x, y, z) respectively represent a distance between a point corresponding to the coordinate and an x-axis, a y-axis, and a z-axis.

In Example 1, the information of the N coordinates may also be referred to as first point cloud information, and the information of the M coordinates may also be referred to as second point cloud information. Here, a point cloud refers to a dataset of points under a certain coordinate system. For example, the point cloud information includes the positions of multiple points, that is, the x, y, z coordinates of the multiple points in three-dimensional space, which is essential information. Additionally, there may be information such as color, light intensity, class labels, normal vectors, grayscale values, etc., which are non-essential information, and whether these are needed can be determined based on actual requirements.

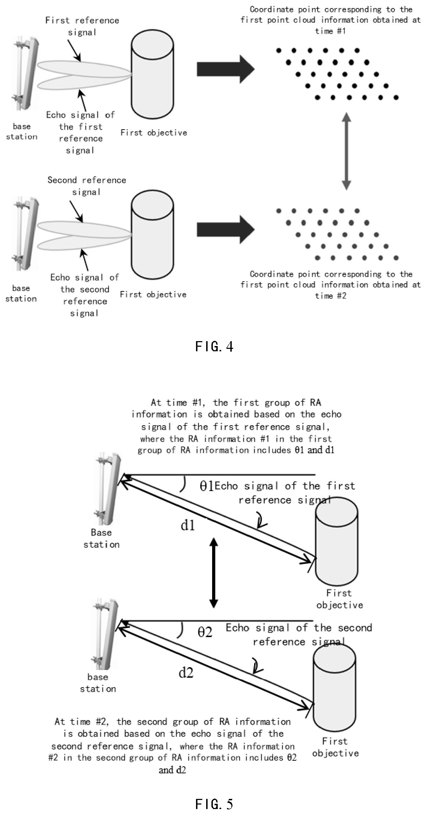

Based on Example 1, as shown in Figure 4, in the single-station sensing mode of the base station, the base station sends a first reference signal, where an echo signal is generated after the first reference signal is refracted, reflected, or scattered on the first target surface. The first device receives this echo signal, and the base station obtains the first point cloud information at time #1 based on this echo signal, where the coordinates corresponding to the first point cloud information are as shown in Figure 4. Similarly, the base station sends a second reference signal, where an echo signal is generated after the second reference signal is refracted, reflected, or scattered on the first target surface. The first device receives this echo signal, and the base station obtains the second point cloud information at time #2 based on this echo signal, where the coordinates corresponding to the second point cloud information are as shown in Figure 4. The first point cloud information and the second point cloud information include the same number of coordinates (i.e., M=N), and the coordinates included in the first point cloud information and the second point cloud information are correlated (for example, the coordinates included in the first point cloud information and the second point cloud information are in one-to-one correspondence). Therefore, after the first device sends the first measurement information and the second measurement information to the second device in S230, the second device may determine the deformation of the first target based on the N coordinates of the first point cloud information and the M coordinates of the second point cloud information. For example, the second device may obtain an amount of deformation of the first target by subtracting coordinate B from the N coordinates of the first device using coordinate A from the M coordinates, where coordinate A and coordinate B are corresponding coordinates.

Based on Example 1, the first point cloud information and the second point cloud information include different quantities of coordinates (that is, M is not equal to N), and the L coordinates included in the first point cloud information are related to the L coordinates included in the second point cloud information (for example, the L coordinates included in the first point cloud information are in a one-to-one correspondence with the L coordinates included in the second point cloud information). In this case, after the first device sends the first measurement information and the second measurement information to the second device in S230, the second device may determine the deformation amount of the first target based on the L coordinates included in the first point cloud information and the L coordinates included in the second point cloud information. For example, the second device may obtain a deformation amount of the first target by subtracting coordinate B from coordinates B included in the L coordinates of the second point cloud information through coordinate A included in the L coordinates of the first point cloud information, where coordinate A and coordinate B are related coordinates.

In Example 2, if the N coordinates and the M coordinates are polar coordinates, each of the N coordinates and the M coordinates consists of two real numbers (R, A), where R represents a distance between a point corresponding to the coordinate and the first device, and A represents an angle between a line connecting the point corresponding to the coordinate and the first device and a first reference line.

Optionally, in Example 2, R may also represent a distance-related measurement value, such as a time information measurement value, and a distance may be determined based on the distance-related measurement value. For example, R may represent information such as a round trip time (RTT), a receive- and transmit-time difference (Rx-Tx time difference), or a time of arrival.

In Example 2, the information about the N coordinates may also be referred to as first group of range angle (range angle, RA) information, where the first group of RA information includes N pieces of RA information; or the information about the M coordinates may also be referred to as second group of RA information, where the second group of RA information includes N pieces of RA information, and one piece of RA information includes distance information and angle information corresponding to one polar coordinate.

Optionally, the distance information and the angle information in the RA information may be carried in different information, or may be carried in the same information. This is not limited in this application.

Based on Example 2, as shown in Figure 5, in the single-station sensing mode of the base station, the base station sends a first reference signal, where an echo signal is generated after the first reference signal is refracted, reflected, or scattered on the first target surface. The first device receives this echo signal, and the base station obtains a first set of RA information at time #1 based on this echo signal, where the angle and distance in the RA information #1 included in the first set of RA information are θ1 and d1 as shown in Figure 5. Similarly, the base station sends a second reference signal to the first target, and then the base station receives an echo signal of the second reference signal. The base station determines a second set of RA information at time #2 based on the echo signal of the second reference signal, where the angle and distance in the RA information #2 included in the second set of RA information are θ2 and d2 as shown in Figure 5. Therefore, after the first device sends the first measurement information and the second measurement information to the second device in S230, the second device may determine the deformation of the first target based on the N coordinates and the M coordinates. For example, the second device may obtain the deformation magnitude of the first target by subtracting coordinate B from the coordinates of the N coordinates through coordinate A from the M coordinates, where coordinate A and coordinate B are corresponding coordinates.

Implementation 2: Information about the N coordinates indicates the N coordinates, and information about the M coordinates includes differential information of the M coordinates. Optionally, the coordinate types corresponding to the N coordinates and the M coordinates are Cartesian coordinates or polar coordinates. The following provides an example for illustration with reference to different coordinate types.

Optionally, the differential information of the M coordinates is determined by the first device based on the first reference signal and the second reference signal. For example, the differential information of the M coordinates is obtained based on phase difference information between the first reference signal and the second reference signal.

It may be understood that, in this implementation, the N coordinates are used to depict the first target, and the differential information of the M coordinates is used to depict a deformation generated based on the first target depicted by the N coordinates.

Optionally, in implementation 2, information about the N coordinates indicates the N coordinates, and information about the M coordinates indicates M differential coordinates corresponding to the M coordinates. The following provides an example for illustration.

It may be understood that if M is equal to N, the N coordinates are related to the M differential coordinates; or if M is not equal to N, L coordinates in the N coordinates are related to L differential coordinates in the M differential coordinates. For example, the N coordinates are three-dimensional Cartesian coordinates, where any one of the N coordinates includes three real numbers (x, y, z), and (x, y, z) respectively represent distances from a point corresponding to the coordinate to the x-axis, the y-axis, and the z-axis. The differential coordinate #i in the M differential coordinates includes three real numbers, where 1≤i≤M. Herein, and respectively represent an offset of the differential coordinate #i relative to the coordinate #i on the x-axis, the y-axis, and the z-axis, and the coordinate #i is a coordinate corresponding to the differential coordinate #i in the N coordinates.(*Δxi*, *Δyi*, *Δzi*)*i*(*Δxi*, *Δyi*, *Δzi*)

In Example 1, the information about the N coordinates may also be referred to as first point cloud information, and the information about the M coordinates may also be referred to as differential point cloud information.

In Example 2, the N coordinates are polar coordinates, where any one of the N coordinates includes two real numbers (R, A), where R represents a distance between a point corresponding to the coordinate and the first device, and A represents an angle between a line connecting the point corresponding to the coordinate and the first device and the first reference line. Each of the M differential coordinates #i includes two real numbers, where 1≤i≤M. Herein, represents an offset in distance and angle relative to the coordinate #i, and the coordinate #i is a coordinate corresponding to the differential coordinate #i in the N coordinates.(*ΔRi*, *ΔAi*)*i*(*ΔRi*, *ΔAi*)

Optionally, in this implementation, the information about the N coordinates indicates the N coordinates, and the differential information about the M coordinates indicates the M differential distances corresponding to the M coordinates. The following provides an example for illustration.

It may be understood that if M is equal to N, the N coordinates are related to the M differential distances; or if M is not equal to N, L coordinates of the N coordinates are related to L differential distances of the M differential distances.

Example 1: If the N coordinates are three-dimensional Cartesian coordinates, any one of the N coordinates includes three real numbers (x, y, z), where (x, y, z) respectively represent a distance from a point corresponding to the coordinate to the x-axis, y-axis, and z-axis. A value of the differential distance #i in the M differential distances is, where 1≤i≤M, indicates a distance offset relative to the coordinate #i, and the coordinate #i is a coordinate related to the differential distance #i in the N coordinates.*ΔdiiΔdi*

Example 2: If the N coordinates are polar coordinates, any one of the N coordinates includes two real numbers (R, A), where R represents a distance between a point corresponding to the coordinate and the first device, and A represents an angle between a line connecting the point corresponding to the coordinate and the first device and a first reference line. A value of the differential distance #i in the M differential distances is, where 1≤i≤M, indicates a distance offset relative to the coordinate #i, and the coordinate #i is a coordinate related to the differential coordinate #i in the N coordinates.*ΔdiiΔdi*

S230: The first device sends first measurement information and second measurement information to the second device. Correspondingly, the second device receives the first measurement information and the second measurement information from the first device, and the second device may determine the deformation of the target object based on the first measurement information and the second measurement information.

Optionally, the second device may be a network element related to positioning. For example, the second device may be an LMF.

Optionally, the second device may be a network element related to sensing. For example, the second device may be a network element of a sensing function (sensing function, SF).

Optionally, when the first device is an O-RAN device, this step may be performed by a first module in the first device. For example, the first module may directly send the first measurement information and the second measurement information to the second device, or may send the first measurement information and the second measurement information to a second module of the first device, where the second module directly or indirectly sends the information to the second device. This application does not impose any limitations thereto.

For example, when the first device is an O-RAN device, S210 and S220 may be implemented by an RU, a DU, or a CU, and S230 may be implemented by an RU, a DU, or a CU.

It should be noted that, in this application, the first measurement information and the second measurement information are merely used as examples for description. In actual application, a plurality of pieces of measurement information may be obtained, and deformation of the first target may be described based on a plurality of groups of measurement information. Details are not described herein again.

It should be understood that sequence numbers of the foregoing processes do not mean execution sequences. The execution sequences of the processes should be determined according to functions and internal logic of the processes, and should not be construed as any limitation on implementation processes of embodiments of this application.

It should also be understood that in the foregoing embodiments, devices in an existing network architecture are mainly used as examples for description. It should be understood that a specific form of the device is not limited in embodiments of this application. For example, devices that can implement the same functions in the future are all applicable to embodiments of this application.

It may be understood that the methods and operations implemented by the first device in the foregoing method embodiments may also be implemented by components (for example, a chip or a circuit) of the first device.

The foregoing has described in detail the method provided in the embodiments of this application with reference to FIG. 1 to FIG. 5. The foregoing method is mainly described from the perspective of interaction between the first device and the second device. It may be understood that, to implement the foregoing functions, the first device includes a corresponding hardware structure and/or software module for performing each function.

A person skilled in the art should be aware that, in combination with units and algorithm steps of the examples described with reference to the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

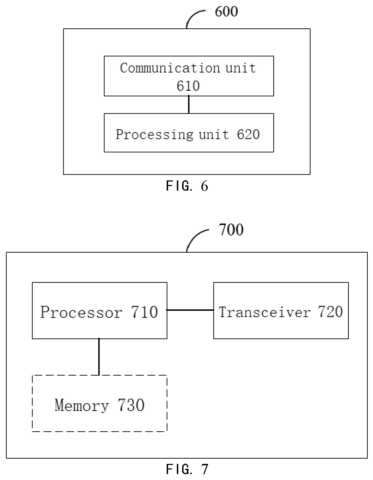

The following provides a detailed description of the communication apparatuses provided in the embodiments of this application with reference to FIG. 6 and FIG. 7. It should be understood that the descriptions of the apparatus embodiments correspond to the descriptions of the method embodiments. Therefore, for content that is not described in detail, refer to the foregoing method embodiments. For brevity, some content is not described again. In the embodiments of this application, the first device may be divided into function modules based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that the module division in the embodiments of this application is an example, and is merely a logical function division, and there may be another division manner in actual implementation. The following provides an example for description by using an example in which each function module is obtained through division based on each corresponding function.

The foregoing has provided a detailed description of the method provided in this application. The following describes a communication apparatus provided in this application. In a possible implementation, the apparatus is configured to implement steps or procedures corresponding to the first device in the foregoing method embodiments.

FIG. 6 is a schematic block diagram of a communication apparatus 600 according to an embodiment of this application. As shown in FIG. 6, the apparatus 600 may include a communication unit 610 and a processing unit 620. The communication unit 610 may communicate with an external device, and the processing unit 620 is configured to perform data processing. The communication unit 610 may also be referred to as a communication interface or a transceiver unit. The communication unit 610 sends information and/or receives information.

For example, "the communication unit 610 sends information" may be understood as that the communication unit 610 sends information to a device, or may be understood as that the communication unit 610 sends information to a logical module. For example, "the communication unit 610 receives information" may be understood as that the communication unit 610 receives information from a device, or may be understood as that the communication unit 610 receives information from a logical module.

Optionally, the transceiver unit may include a receiving unit and a sending unit. This is not limited in this application.

In a possible design, the apparatus 600 may implement steps or procedures performed by the first device in the foregoing method embodiments. The processing unit 620 is configured to perform an operation related to processing performed by the first device in the foregoing method embodiments, and the communications unit 610 is configured to perform an operation related to receiving and sending performed by the first device in the foregoing method embodiments. For example, in the method 200, the communications unit 610 may be configured to perform an operation performed by the first device in S230, and the processing unit 620 may be configured to perform an operation performed by the first device in S210 and S220.

Optionally, the communication apparatus 600 may further include a storage unit. The storage unit may be configured to store instructions and/or data. The processing unit 620 may read the instructions and/or the data in the storage unit, so that the communication apparatus 600 implements the foregoing method embodiments.

It should be understood that the apparatus 600 herein is embodied in the form of functional units. The term "unit" herein may refer to an application-specific integrated circuit (ASIC), an electronic circuit, a processor (for example, a shared processor, a dedicated processor, or a group of processors) configured to execute one or more software or firmware programs and a memory, a merged logic circuit, and/or any other suitable component that supports the described functions. In an optional example, a person skilled in the art may understand that the apparatus 600 may be specifically the first device in the foregoing embodiments, and may be configured to perform the processes and/or steps corresponding to the first device in the foregoing method embodiments. To avoid repetition, details are not described herein again.

The apparatus 600 in the foregoing solutions has a function of implementing the corresponding steps performed by the first device in the foregoing methods. The function may be implemented by hardware, or may be implemented by hardware executing corresponding software. The hardware or software includes one or more modules corresponding to the foregoing functions. For example, the communication unit may be replaced with a transceiver (for example, the sending unit in the communication unit may be replaced with a transmitter, and the receiving unit in the communication unit may be replaced with a receiver), and another unit, such as the processing unit, may be replaced with a processor, to separately perform the receiving and sending operations and the related processing operations in each method embodiment.

In an implementation, the communication apparatus is a first device. When the communication apparatus is a device, the transceiver unit may be a transceiver or an input/output interface, and the processing unit may be at least one processor or a processor-related circuit. Optionally, the transceiver may be a transceiver circuit (for example, may include a receiving circuit and a transmitting circuit). Optionally, the input/output interface may be an input/output circuit.

FIG. 7 is a schematic block diagram of a communication apparatus 700 according to an embodiment of this application. The apparatus 700 includes a processor 710 and a transceiver 720. The processor 710 and the transceiver 720 communicate with each other through connection or coupling. The processor 710 is configured to execute instructions to control the transceiver 720 to send information and/or receive information.

For example, "the transceiver 720 sends information" may be understood as that the transceiver 720 sends information to a device, or may be understood as that the transceiver 720 sends information to a logical module. For example, "the transceiver 720 receives information" may be understood as that the transceiver 720 receives information from a device, or may be understood as that the transceiver 720 receives information from a logical module. Optionally, the apparatus 700 may further include a memory 730, where the memory 730 communicates with the processor 710 and the transceiver 720 through connection or coupling. The memory 730 is configured to store instructions, and the processor 710 may execute the instructions stored in the memory 730.

Optionally, the memory 730 may include a read-only memory and a random access memory, and provide instructions and data for the processor. A part of the memory may further include a non-volatile random access memory. For example, the memory may further store information about a device type. The memory 730 is configured to store an instruction, and the processor 710 may be configured to execute the instruction stored in the memory. When the processor 710 executes the instruction stored in the memory, the processor 710 is configured to perform the steps and/or procedures of the method embodiment corresponding to the first device as described above.

Optionally, the communication apparatus 700 may include one or more memories 730.

Optionally, the memory 730 may be integrated with the processor 710, or may be disposed separately.

In a possible implementation, the apparatus 700 is configured to implement each procedure and step corresponding to the first device in the foregoing method embodiments. For example, in method 200, the transceiver 720 may be configured to perform an operation performed by the first device in S230, and the processor 710 may be configured to perform an operation performed by the first device in S210 and S220.

In an implementation, the communication apparatus 700 is a first device. When the communication apparatus is a device, the transceiver may be an input/output interface; and the processor may be at least one processor-related circuit. Optionally, the transceiver may be a transceiver circuit (for example, may include a receiving circuit and a sending circuit). Optionally, the input/output interface may be an input/output circuit.

In another implementation, the communication apparatus 700 is a chip, a chip system, or a circuit used in a first device, where the transceiver may be an input/output circuit or a communication interface; and the processor may be a processing module, a microprocessor, or an integrated circuit integrated on the chip. The sending operation of the device in the foregoing method embodiments may be understood as an output operation of the chip, and the receiving operation of the device in the foregoing method embodiments may be understood as an input operation of the chip.

It should be understood that the apparatus 700 may be specifically the first device in the foregoing embodiments, or may be a chip or a chip system. Correspondingly, the transceiver 720 may be a transceiver circuit of the chip, which is not limited herein. Specifically, the apparatus 700 may be configured to perform the steps and/or procedures corresponding to the first device in the foregoing method embodiments.

Optionally, the transceiver includes a transmitter and a receiver, which respectively implement the steps of sending and receiving performed by the first device in the embodiments of this application. When the apparatus 700 is a chip, the transmitter and the receiver may serve as input/output interfaces of the chip. The transmitter corresponds to output, and the receiver corresponds to input.

In an implementation process, the steps of the foregoing methods may be implemented by an integrated logic circuit of hardware in the processor or by instructions in a form of software. The steps of the methods disclosed in embodiments of this application may be directly implemented by a hardware processor, or may be implemented by a combination of hardware in the processor and software modules. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps of the foregoing methods with the aid of the hardware of the processor. To avoid repetition, details are not described herein again.

It should be noted that the processor in the embodiments of this application may be an integrated circuit chip that has a signal processing capability. In an implementation process, the steps in the foregoing method embodiments may be implemented by using an integrated logic circuit in hardware in the processor or by using instructions in a form of software. The processor may be a general-purpose processor, a digital signal processor (digital signal processing, DSP), an ASIC, a field-programmable gate array (field-programmable gate array, FPGA) or another programmable logic device, a discrete gate or transistor logic device, or a discrete hardware component. The processor in the embodiments of this application may implement or perform the methods, steps, and logical block diagrams disclosed in the embodiments of this application. The general-purpose processor may be a microprocessor, or the processor may be any conventional processor, or the like. The steps of the methods disclosed with reference to embodiments of this application may be directly performed and completed by a hardware decoding processor, or may be performed and completed by a combination of hardware and software modules in the decoding processor. The software module may be located in a mature storage medium in this field, such as a random access memory, a flash memory, a read-only memory, a programmable read-only memory, an electrically erasable programmable memory, or a register. The storage medium is located in a memory, and the processor reads information from the memory, and completes the steps of the foregoing methods in combination with hardware of the processor.

It is understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example and not limitation, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described in this specification is intended to include, but not limited to, these and any other memory of suitable types.

It should be noted that when the processor is a general-purpose processor, a DSP, an ASIC, an FPGA or another programmable logic device, a discrete gate or transistor logic device, or a discrete hardware component, the memory (storage module) may be integrated into the processor.

In addition, this application provides a computer-readable storage medium, where the computer-readable storage medium stores computer instructions, and when the computer instructions are run on a computer, the operations and/or procedures performed by the first device in the method embodiments of this application are performed.

This application further provides a computer program product, where the computer program product includes computer program code or instructions, and when the computer program code or instructions are run on a computer, the operations and/or procedures performed by the first device in the method embodiments of this application are performed.

In addition, this application provides a chip, where the chip includes a processor. A memory configured to store a computer program is disposed independently of the chip, and the processor is configured to execute the computer program stored in the memory, so that the operations and/or processing performed by the first device in any method embodiment are performed.

Further, the chip may further include a communication interface. The communication interface may be an input/output interface, or may be an interface circuit, or the like. Further, the chip may further include a memory.

It should also be noted that the memory described in this specification aims to include but is not limited to these and any other memory of an appropriate type.

A person of ordinary skill in the art may be aware that, in combination with the examples described in the embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered as beyond the scope of this application. It may be clearly understood by a person skilled in the art that, for the purpose of convenient and brief description, for a detailed working process of the foregoing system, apparatus, and unit, refer to a corresponding process in the foregoing method embodiments, and details are not described herein again. In several embodiments provided in this application, it should be understood that the disclosed systems, apparatuses, and methods may be implemented in other ways. For example, the foregoing apparatus embodiments are merely examples. For example, the division into units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms. The units described as separate components may or may not be physically separate, and components displayed as units may or may not be physical units, may be located in one place, or may be distributed on a plurality of network units. Some or all of the units may be selected according to an actual need to achieve the objectives of the solutions in embodiments. In addition, the functional units in embodiments of this application may be integrated into one processing unit, or each of the units may exist alone physically, or two or more units may be integrated into one unit.

When the functions are implemented in the form of software functional units and sold or used as an independent product, they may be stored in a computer-readable storage medium. Based on such an understanding, the technical solutions of this application essentially, or the part contributing to the prior art, or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that "embodiments" mentioned throughout this specification mean that particular features, structures, or characteristics associated with embodiments are included in at least one embodiment of this application. Therefore, embodiments described in various places in this specification do not necessarily refer to the same embodiment. In addition, these particular features, structures, or characteristics may be combined in one or more embodiments in any suitable manner.

It should also be understood that in this application, "when...," "if," and "when" all refer to the fact that an NE will perform corresponding processing under certain objective conditions, and do not limit the time, nor do they require that the NE necessarily perform a judgment action when implementing the processing, nor do they imply any other limitations.

It should also be understood that in the embodiments of this application, "B corresponding to A" indicates that B is associated with A, and B can be determined based on A. However, it should also be understood that determining B based on A does not mean that B is determined solely based on A; B may also be determined based on A and/or other information.

The foregoing description is merely a specific implementation of this application, but the protection scope of this application is not limited thereto. Any variation or replacement readily figured out by a person skilled in the art within the technical scope disclosed in this application should fall within the protection scope of this application. Therefore, the protection scope of this application should be determined by the protection scope of the claims.

## Claims

1. A method for sending measurement information, comprising:
obtaining first measurement information based on a first reference signal, wherein the first measurement information comprises information about N coordinates, the N coordinates are associated with a first path, and N is a positive integer;
obtaining second measurement information based on a second reference signal, wherein the second measurement information comprises information about M coordinates, the M coordinates are associated with the first path, and M is a positive integer;
sending the first measurement information and the second measurement information.

2. The method according to claim 1, wherein N is equal to M.

3. The method according to claim 1 or 2, wherein information about L coordinates of the information about the M coordinates is related to information about L coordinates of the information about the N coordinates, and L is a positive integer.

4. The method according to any one of claims 1 to 3, wherein the information about the N coordinates indicates N coordinates, and the information about the M coordinates indicates M coordinates.

5. The method according to any one of claims 1 to 3, wherein the information about the N coordinates indicates N coordinates, and the information about the M coordinates comprises differential information about the M coordinates.

6. The method according to claim 5, wherein the differential information about the M coordinates indicates M differential coordinates corresponding to the M coordinates or M differential distances corresponding to the M coordinates.

7. The method according to any one of claims 1 to 6, wherein a coordinate type corresponding to the N coordinates and the M coordinates is a Cartesian coordinate or a polar coordinate.

8. The method according to any one of claims 1 to 7, wherein the first path is associated with a first target.

9. The method according to any one of claims 1 to 8, wherein the first reference signal and the second reference signal are one of the following reference signals: a positioning reference signal PRS, a sounding reference signal SRS, a channel state information-reference signal CSI-RS, a primary synchronization signal PSS, a secondary synchronization signal SSS, a demodulation reference signal DMRS, a sensing signal, or a sounding signal.

10. A communication apparatus, comprising:
a processing unit, configured to obtain first measurement information based on a first reference signal, wherein the first measurement information comprises information about N coordinates, the N coordinates are associated with a first path, and N is a positive integer;
the processing unit is further configured to obtain second measurement information based on a second reference signal, wherein the second measurement information comprises information about M coordinates, the M coordinates are associated with the first path, and M is a positive integer;
A communication unit, configured to send the first measurement information and the second measurement information.

11. The apparatus according to claim 10, wherein N is equal to M.

12. The apparatus according to claim 10 or 11, wherein information about L coordinates in the information about the M coordinates is related to information about L coordinates in the information about the N coordinates, wherein L is a positive integer.

13. The apparatus according to any one of claims 10 to 12, wherein the information about the N coordinates indicates N coordinates, and the information about the M coordinates indicates M coordinates.

14. The apparatus according to any one of claims 10 to 12, wherein the information about the N coordinates indicates N coordinates, and the information about the M coordinates comprises differential information about the M coordinates.

15. The apparatus according to claim 14, wherein the differential information of the M coordinates indicates M differential coordinates corresponding to the M coordinates or M differential distances corresponding to the M coordinates.

16. The apparatus according to any one of claims 10 to 15, wherein a coordinate type corresponding to the N coordinates and the M coordinates is a Cartesian coordinate or a polar coordinate.

17. The apparatus according to any one of claims 10 to 16, wherein the first path is associated with a first target.

18. The apparatus according to any one of claims 10 to 17, wherein the first reference signal or the second reference signal is one of the following reference signals: a positioning reference signal PRS, a sounding reference signal SRS, a channel state information-reference signal CSI-RS, a primary synchronization signal PSS, a secondary synchronization signal SSS, a demodulation reference signal DMRS, a sensing signal, or a sounding signal.

19. A communication apparatus, comprising at least one processor, wherein the at least one processor is configured to execute a computer program stored in a memory, so that the apparatus implements the method according to any one of claims 1 to 9.

20. A computer-readable storage medium, comprising: a computer program stored in the computer-readable storage medium; and when the computer program is run, the method according to any one of claims 1 to 9 is performed.

21. A computer program product, comprising a computer program, wherein when the computer program is run, the method according to any one of claims 1 to 9 is performed.
